# EUROPEAN PATENT SPECIFICATION

(11) **EP 3 569 487 B1**
(45) Date of publication and mention of the grant of the patent: **17.11.2021**
(21) Application number: 19174527.2
(22) Date of filing: 14.05.2019
(51) Int. Cl.: B63B 32/10

(54) **SURFING EQUIPMENT**
SURF-AUSRÜSTUNG
ÉQUIPEMENT DE SURF

(30) Priority: 14.05.2018 CN 201820712031 U
(43) Date of publication of application: 20.11.2019
(73) Proprietor: Yujet International Corporation Limited, Central Hong Kong (CN)
(72) Inventor: Tian, Yu, Jinshan District, Shanghai (CN)
(74) Representative: MERH-IP Matias Erny Reichl Hoffmann Patentanwälte PartG mbB

(56) References cited:
- WO-A2-2011/100654
- US-A1- 2018 072 383

## Description

The present invention claims the priority of the CN201820712031.3, filed on May 14th, 2018, the contents of which are incorporated herein by its entirety.

### Field of invention

The present invention relates to a surfing equipment.

### Prior arts

At present, in the surfing equipment in which the propulsion module and the battery module are separately disposed, the information of the battery module, such as the battery power, the internal temperature and humidity, etc., is difficult to be directly transmitted to the speed controller inside the propulsion module for unified transmission to the external controller of surfing equipment. Since the battery module and the propulsion module of the surfing equipment have higher requirements for waterproofing. If the propulsion module and the battery module are connected by wires or the like, it is likely to reduce the waterproof performance of the battery module and the propulsion module, but the manufacturing cost of the equipment would be significantly increased by extra setting a specific terminal. WO 2011/100654 A2 relates to an electric-powered surfboard with an integrated water jet pump assembly. US 2018/0072383 A1 relates to a watercraft device comprising a board, a throttle coupled to a top surface of the board, a hydrofoil coupled to a bottom surface of the board, and an electric propeller system coupled to the hydrofoil. Therefore, an optimized solution is needed to realize the data transmission from the battery module to the propulsion module.

### Content of the present invention

The technical problem to be solved by the present invention is to provide a surfing equipment in order to overcome the inconvenience of data transmission from the battery module to the propulsion module in the prior art.

The invention solves the above technical problems by the following technical solutions:

A surfing equipment, comprising a surfboard, a battery module, a propulsion module, a signal transmitter, a signal receiver, and a speed controller;

The battery module and the propulsion module are respectively disposed on opposite surfaces of the surfboard, and the battery module and the propulsion module are connected to each other via a through hole in the surfboard;

The signal transmitter is disposed within the battery module and located in a first area of the battery module facing the propulsion module, the first area faces the through hole, the signal transmitter is electrically coupled to a battery in the battery module;

The signal receiver is disposed in the propulsion module and faces the signal transmitter to receive a signal sent by the signal transmitter by means of a wireless connection;

The speed controller is disposed in the propulsion module, the speed controller is electrically coupled to the signal receiver, and the speed controller is configured to be electrically coupled to a control device of the surfing equipment.

The signal transmitter is an infrared transmitter, and the signal receiver is an infrared receiver;

The first area is provided with a first transparent glass, a second area of the propulsion module facing the first area is provided with a second transparent glass, and the signal transmitter is disposed to face the first transparent glass and the signal receiver is disposed to face the second transparent glass.

The present solution uses an infrared transmitter and a infrared receiver as a signal receiver and a signal transmitter for transmitting data, which is a better way for transmitting data.

It is advantaged that the first area is provided with a mounting seat projecting inwardly from an inner wall of the propulsion module, and the mounting seat is provided with a perforation in which the signal transmitter is inserted.

It is advantaged that the signal transmitter collects status information of the battery.

It is advantaged that the propulsion module comprises an electric motor and a propeller and the electric motor drives the propeller to rotate, and the speed controller is electrically coupled to the electric motor.

It is advantaged that the battery module comprises a battery protection board electrically coupled to the battery and the signal transmitter, respectively.

In the present solution, the battery protection board can prevent the battery module from being overcharged, over-discharged, over-current, short-circuited or charged and discharged with ultra-high temperature.

It is advantaged that the battery module further comprises a power jack and the propulsion module further comprises a power plug, the power jack being plugged into the power plug via the through hole.

The present solution can quickly connect or disconnect the battery module and the propulsion module through the plugin form, which increases the convenience of removal or installation.

It is advantaged that the surfboard is provided with a battery chamber and a power chamber, the battery chamber and the power chamber being communicated with the through hole and located two opposite surfaces of the surfboard, and the battery module are disposed in the battery chamber and the propulsion module is disposed in the power chamber.

It is advantaged that the battery chamber and the power chamber are staggered in a thickness direction of the surfboard.

The design space of the battery module and the propulsion module in the thickness direction is increased by staggeringly disposing the battery chamber and the power chamber.

It is advantaged that the battery module and the propulsion module are detachably connected to the surfboard.

When an accident occurs, it is only necessary to remove the battery module or the propulsion module for repair, and it is not necessary to repair it together with the huge surfboard, which significantly facilitates transportation and maintenance.

The progressive significance of the invention is that the surfing equipment is disposed a transmitter and a receiver on the mutually facing surfaces of the propulsion module and the battery module, so that the data can be conveniently transmitted without reducing the waterproofing performance of the surfing equipment.

### Brief description of the drawings

Fig.1 is a schematic perspective view of a surfing equipment in accordance with a preferred embodiment of the present invention.

Fig.2 is a schematic exploded view of a surfing equipment in accordance with a preferred embodiment of the present invention.

Fig.3 is a schematic cross-sectional view of a surfboard in accordance with a preferred embodiment of the present invention.

Fig.4 is a cross-sectional structural view of an interconnected battery module and propulsion module in accordance with a preferred embodiment of the present invention.

Fig.5 is a schematic enlarged view of a portion A of Fig. 4.

Description of the reference signs:
Surfing equipment 10
Surfboard 20
Battery chamber 21
Power chamber 22
Through hole 23
Battery module 30
Propulsion module 40
Signal transmitter 50
Signal receiver 60
Speed controller 70
The first area 81
Mounting seat 82
Power plug 84

### Detailed description of the preferred embodiment

With reference to the drawing, the following examples further illustrate the present invention, but the present invention is not limited thereto.

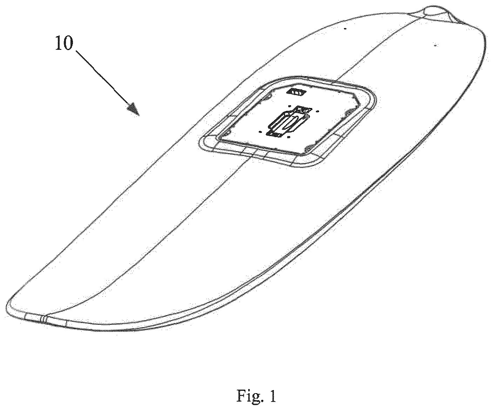

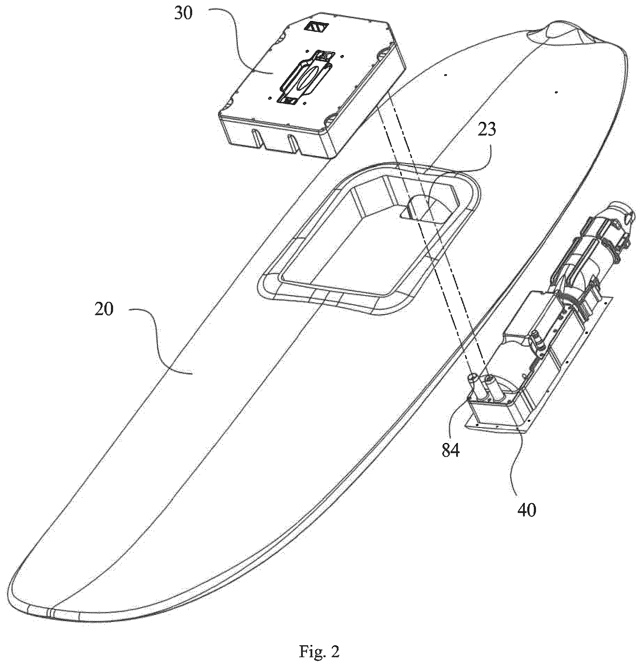

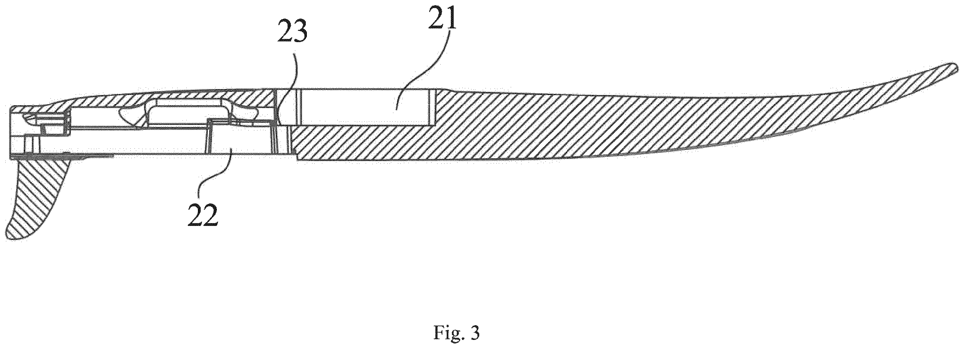

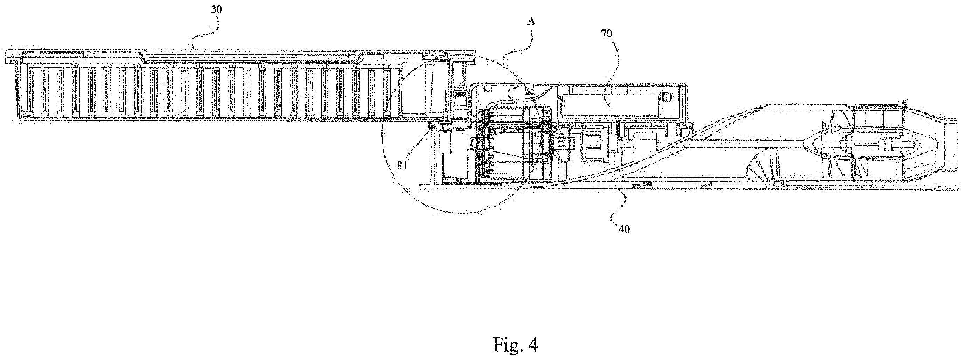

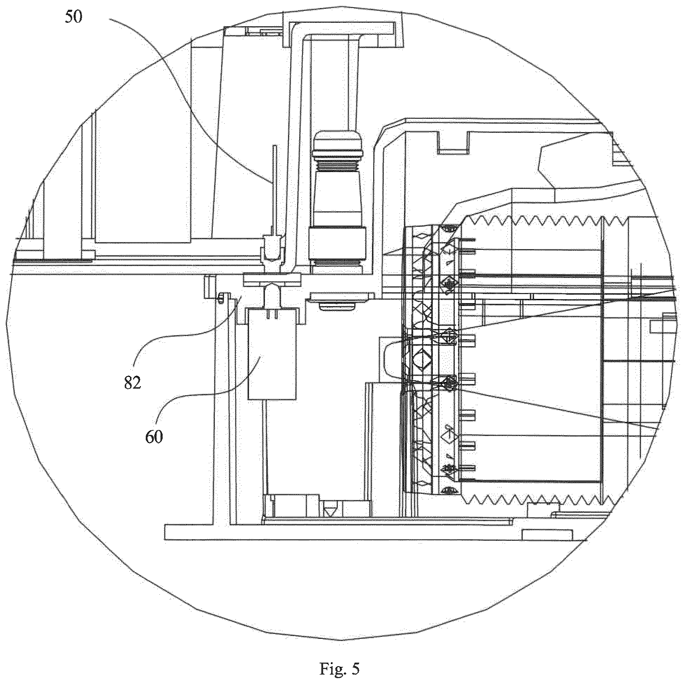

As shown in Figure 1 to 5, a surfing equipment 10, comprising a surfboard 20, a battery module 30, a propulsion module 40, a signal transmitter 50, a signal receiver 60, and a speed controller 70;

The battery module 30 and the propulsion module 40 are respectively disposed on opposite surfaces of the surfboard 20, and the battery module 30 and the propulsion module 40 are connected with each other via a through hole 23 in the surfboard 20;

The propulsion module 40 comprises an electric motor and a propeller drived by the electric motor to rotate. The speed controller 70 is disposed in the propulsion module 40 and is electrically coupled to the signal receiver 60 (generally connected by data lines), and the speed controller 70 is configured to be electrically coupled to a control device of the surfing equipment 10. The mode of connection between the speed controller 70 and the control device may be wireless or wired. The wireless mode may be such as Wifi, Bluetooth, or infrared light. And the wired mode may be coupled through a data line or the like.

The speed controller 70 is electrically coupled to the electric motor to receive various status data from the motor, such as rotational speed, operating time, etc., and to regulate operation of the electric motor in accordance with a control device external to the surfing equipment 10. The control device may be a remote controller, an electronic device with the function of signal transceiving, etc., and the control device may have a display to display various status data of the propulsion module 40 and the battery module 30 received by the control device.

The battery module 30 comprises a housing, and a battery protection board and a battery cell disposed inside the housing, etc., and the battery protection board is electrically coupled to the battery and the signal transmitter 50 (generally connected by data lines, wires, etc.).

The battery protection board can prevent the battery module 30 from being overcharged, over-discharged, over-current, short-circuited or charged and discharged with ultra-high temperature.

The surfboard 20 is provided with a battery chamber 21 and a power chamber 22, the battery chamber 21 and the power chamber 22 being in connection with the through hole 23 and located two opposite surfaces of the surfboard 20, and the battery module 30 are disposed in the battery chamber 21 and the propulsion module 40 is disposed in the power chamber 22. The battery chamber 21 and the power chamber 22 are staggered in a thickness direction of the surfboard 20. The design space of the battery module 30 and the propulsion module 40 in the thickness direction is increased by staggeringly disposing the battery chamber 21 and the power chamber 22.

The battery module 30 and the propulsion module 40 are detachably connected to the surfboard 20. In this way, when an accident occurs, it is only necessary to remove the battery module 30 or the propulsion module 40 for repair, and it is not necessary to repair it together with the huge surfboard 20, which significantly facilitates transportation and maintenance.

The signal transmitter 50 is disposed in the battery module 30 and located in a first area 81 of the battery module 30 facing the propulsion module 40, the first area 81 faces the through hole 23, and the signal transmitter 50 is electrically coupled to a battery in the battery module 30.

The signal receiver 60 is disposed in the propulsion module 40 and faces the signal transmitter 50 to receive a signal sent by the signal transmitter 50 by means of a wireless connection;

The signal transmitter 50 and the signal receiver 60 are any group of devices that can transmit signals over a wireless connection.

The signal transmitter 50 is disposed in the first area 81 so as to face the propulsion module 40 via the through hole 23, thereby avoiding the interference of the surfboard 20 for signal transmission.

In the present embodiment, the signal transmitter 50 is an infrared emitter and the signal receiver 60 is an infrared receiver.

The first area 81 is provided with a first transparent glass, a second area of the propulsion module 40 facing the first area 81 is provided with a second transparent glass, and the signal transmitter 50 is disposed to face the first transparent glass and the signal receiver 60 is disposed to face the second transparent glass.

The present solution uses an infrared transmitter and a infrared receiver as a signal receiver 60 and a signal transmitter for transmitting data, which is a better way for transmitting data. Moreover, the cost of infrared transmission is lower, which can reduce the total cost of the equipment. Moreover, the transparent glass can well prevent the infrared transmission from being waterproofed.

Selectively, Bluetooth, HiperLAN, HomeRF, Wi-Fi, IEEE802111, radio waves, etc. can also be used.

The second area is provided with a mounting seat 82 projecting inwardly from an inner wall of the propulsion module 40, and the mounting seat 82 is provided with a perforation which the signal transmitter 50 is inserted into.

The signal transmitter 50 is primarily used to collect status information of the battery and transmit the status information to the signal receiver 60, which in turn transmits the status information to the speed controller 70. The status information of the battery may include, but is not limited to, the remaining battery capacity, the temperature of the battery, whether the battery module is leaking inside, the humidity inside the battery module, the battery life, the battery failure information, etc.

The battery module 30 further comprises a power jack and the propulsion module 40 further comprises a power plug 84, the power jack being plugged into the power plug 84 via the through hole 23. In the present embodiment, the signal transmitter 50 and the signal receiver 60 are disposed in front of the power jack and the power plug 84, where the direction in which the way forward by the surfing equipment 10 is defined as the front. Alternatively, the signal transmitter 50 and the signal receiver 60 may also be arranged to be flush with the power jack and the power plug 84 in the lateral direction to save space.

The present solution can quickly connect or disconnect the battery module and the propulsion module through the plugin form, which increases the convenience of removal or installation.

The surfing equipment 10 is disposed a transmitter and a receiver on the mutually facing surfaces of the propulsion module 40 and the battery module 30, so that the data can be conveniently transmitted without reducing the waterproofing performance of the surfing equipment 10.

In the description of the present invention, it is to be understood that the direction or positional relationship of the terms, "up", "down", "front", "back", "left", "right", "vertical", "horizontal", "top", "bottom", "inside", "outside", etc. , is based on the direction or positional relationship shown in the drawings, and is merely for the convenience of describing the present invention and simplifying the description rather than indicating or implying said equipment or component must have a particular direction, or be configured and operated in a particular direction, and thus is not to be explained as limitation to the present invention.

It is to be understood that the foregoing description of the embodiment is intended to be purely illustrative of the principles of the invention, rather than exhaustive thereof, and that changes and variations will be apparent to those skilled in the art, and that the present invention is not intended to be limited other than expressly set forth in the following claims.

## Claims

1. A surfing equipment comprising a surfboard (20), a battery module (30), a propulsion module (40), a signal transmitter (50), a signal receiver (60), and a speed controller (70); wherein the battery module (30) and the propulsion module (40) are respectively disposed on opposite surfaces of the surfboard (20), and the battery module (30) and the propulsion module (40) are connected to each other via a through hole (23) in the surfboard (20); and wherein the speed controller (70) is disposed in the propulsion module (40), the speed controller (70) is electrically coupled to the signal receiver (60), and the speed controller (70) is configured to be electrically coupled to a control device of the surfing equipment (10); **characterised in that** the signal transmitter (50) is disposed within the battery module (30) and located in a first area (81) of the battery module (30) facing the propulsion module (40), the first area (81) faces the through hole (23), the signal transmitter (50) is electrically coupled to a battery in the battery module (30); wherein the signal receiver (60) is disposed in the propulsion module (40) and faces the signal transmitter (50) to receive a signal sent by the signal transmitter (50) by means of a wireless connection; wherein the signal transmitter (50) is an infrared transmitter, and the signal receiver (60) is an infrared receiver; and wherein the first area (81) is provided with a first transparent glass, a second area of the propulsion module (40) facing the first area (81) is provided with a second transparent glass, and the signal transmitter (50) is disposed to face the first transparent glass and the signal receiver (60) is disposed to face the second transparent glass.

2. The surfing equipment of claim 1, wherein the first area (81) is provided with a mounting seat (82) projecting inwardly from an inner wall of the propulsion module (40), and the mounting seat (82) is provided with a perforation in which the signal transmitter (50) is inserted.

3. The surfing equipment of claim 1, wherein the signal transmitter (50) collects status information of the battery.

4. The surfing equipment of claim 1, wherein the propulsion module (40) comprises an electric motor and a propeller and the electric motor drives the propeller to rotate, and the speed controller (70) is electrically coupled to the electric motor.

5. The surfing equipment of claim 1, wherein the battery module (30) comprises a battery protection board electrically coupled to the battery and the signal transmitter (50), respectively.

6. The surfing equipment of claim 1, wherein the battery module (30) further comprises a power jack and the propulsion module (40) further comprises a power plug (84), the power jack being plugged into the power plug (84) via the through hole (23).

7. The surfing equipment of claim 1, wherein the surfboard (20) is provided with a battery chamber (21) and a power chamber (22), the battery chamber (21) and the power chamber (22) being communicated with the through hole (23) and located two opposite surfaces of the surfboard (20), and the battery module (30) are disposed in the battery chamber (21) and the propulsion module (40) is disposed in the power chamber (22).

8. The surfing equipment of claim 7, wherein the battery chamber (21) and the power chamber (22) are staggered in a thickness direction of the surfboard (20).

9. The surfing equipment of claim 7, wherein the battery module (30) and the propulsion module (40) are detachably connected to the surfboard (20).

## Patentansprüche

1. Surfausrüstung, die ein Surfbrett (20), ein Batteriemodul (30), ein Antriebsmodul (40), einen Signalsender (50), einen Signalempfänger (60) und eine Geschwindigkeitssteuerung (70) umfasst;
wobei das Batteriemodul (30) und das Antriebsmodul (40) jeweils auf gegenüberliegenden Oberflächen des Surfbretts (20) angeordnet sind und wobei das Batteriemodul (30) und das Antriebsmodul (40) über ein Durchgangsloch (23) im Surfbrett (20) miteinander verbunden sind; und
wobei die Geschwindigkeitssteuerung (70) im Antriebsmodul (40) angeordnet ist, wobei die Geschwindigkeitssteuerung (70) mit dem Signalempfänger (60) elektrisch gekoppelt ist und wobei die Geschwindigkeitssteuerung (70) so konfiguriert ist, dass sie mit einer Steuervorrichtung der Surfausrüstung (10) elektrisch gekoppelt ist;
**dadurch gekennzeichnet, dass** der Signalsender (50) im Batteriemodul (30) angeordnet ist und sich in einem ersten Bereich (81) des Batteriemoduls (30) befindet, der zum Antriebsmodul (40) zeigt, wobei der erste Bereich (81) zum Durchgangsloch (23) zeigt, wobei der Signalsender (50) mit einer Batterie im Batteriemodul (30) elektrisch gekoppelt ist;
wobei der Signalempfänger (60) im Antriebsmodul (40) angeordnet ist und zum Signalsender (50) zeigt, um ein Signal zu empfangen, das durch den Signalsender (50) über eine drahtlose Verbindung gesendet wurde;
wobei der Signalsender (50) ein Infrarotsender ist, und wobei der Signalempfänger (60) ein Infrarotempfänger ist; und
wobei der erste Bereich (81) mit einem ersten lichtdurchlässigen Glas versehen ist, ein zweiter Bereich des Antriebsmoduls (40), der zum ersten Bereich (81) zeigt, mit einem zweiten lichtdurchlässigen Glas versehen ist und der Signalsender (50) so angeordnet ist, dass er zum ersten lichtdurchlässigen Glas zeigt, und der Signalempfänger (60) so angeordnet ist, dass er zum zweiten lichtdurchlässigen Glas zeigt.

2. Surfausrüstung nach Anspruch 1, wobei der erste Bereich (81) mit einem Montagesitz (82) versehen ist, der von einer Innenwand des Antriebsmoduls (40) nach innen vorsteht, und wobei der Montagesitz (82) mit einer Perforation versehen ist, in die der Signalsender (50) eingesetzt ist.

3. Surfausrüstung nach Anspruch 1, wobei der Signalsender (50) Statusinformationen der Batterie sammelt.

4. Sufrausrüstung nach Anspruch 1, wobei das Antriebsmodul (40) einen Elektromotor und einen Propeller umfasst und wobei der Elektromotor den Propeller rotatorisch antreibt, und
die Geschwindigkeitssteuerung (70) mit dem Elektromotor elektrisch gekoppelt ist.

5. Sufrausrüstung nach Anspruch 1, wobei das Batteriemodul (30) eine Batterieschutzplatte umfasst, die jeweils mit der Batterie und dem Signalsender (50) elektrisch gekoppelt ist.

6. Surfausrüstung nach Anspruch 1, wobei das Batteriemodul (30) ferner einen Stromanschluss umfasst und das Antriebsmodul (40) ferner einen Netzstecker (84) umfasst, wobei der Stromanschluss durch das Durchgangsloch (23) in den Netzstecker (84) gesteckt wird.

7. Surfausrüstung nach Anspruch 1, wobei das Surfbrett (20) mit einer Batteriekammer (21) und einer Antriebskammer (22) versehen ist, wobei die Batteriekammer (21) und die Antriebskammer (22) mit dem Durchgangsloch (23) kommunizieren und sich auf zwei gegenüberliegenden Oberflächen des Surfbretts (20) befinden und wobei das Batteriemodul (30) in der Batteriekammer (21) angeordnet ist und das Antriebsmodul (40) in der Antriebskammer (22) angeordnet ist.

8. Surfausrüstung nach Anspruch 7, wobei die Batteriekammer (21) und die Antriebskammer (22) in einer Dickenrichtung des Surfbretts (20) versetzt angeordnet sind.

9. Surfausrüstung nach Anspruch 7, wobei das Batteriemodul (30) und das Antriebsmodul (40) mit dem Surfbrett (20) lösbar verbunden sind.

## Revendications

1. Équipement de surf comprenant une planche de surf (20), un module de batterie (30), un module de propulsion (40), un émetteur de signal (50), un récepteur de signal (60) et un contrôleur de vitesse (70) ;
dans lequel le module de batterie (30) et le module de propulsion (40) sont respectivement disposés sur des surfaces opposées de la planche de surface (20), et le module de batterie (30) et le module de propulsion (40) sont connectés l'un à l'autre via un trou traversant (23) dans la planche de surf (20) ;
et dans lequel le contrôleur de vitesse (70) est disposé dans le module de propulsion (40), le contrôleur de vitesse (70) est électriquement couplé au récepteur de signal (60), et le contrôleur de vitesse (70) est configuré pour être électriquement couplé à un dispositif de commande de l'équipement de surf (10) ;
caractériser en ce que l'émetteur de signal (50) est disposé à l'intérieur du module de batterie (30) et est situé dans une première zone (81) du module de batterie (30) en face du module de production (40), la première zone (81) fait face au trou traversant (23), l'émetteur de signal (50) est électriquement couplé à une batterie dans le module de batterie (30) ; dans lequel le récepteur de signal (60) est disposé dans le module de propulsion (40) et fait face à l'émetteur de signal (50) pour recevoir un signal envoyé par l'émetteur de signal (50) au moyen d'une connexion sans fil;
dans lequel l'émetteur de signal (50) est un émetteur infrarouge, et le récepteur de signal (60) et un récepteur infrarouge ;
et dans lequel la première zone (81) est dotée d'un premier verre transparent, une seconde zone du module de propulsion (40) en face de la première zone (81) est dotée d'un second verre transparent, et l'émetteur de signal (50) est disposé de manière à faire face au premier verre transparent et le récepteur de signal (60) est disposé de manière à faire face au second verre transparent.

2. Équipement de surf selon la revendication 1, dans lequel la première zone (81) est dotée d'un siège de montage (82) se projetant vers l'intérieur depuis une paroi intérieure du module de propulsion (40), et le siège de montage (82) est doté d'une perforation dans laquelle l'émetteur de signal (50) est inséré.

3. Équipement de surf selon la revendication 1, dans lequel l'émetteur de signal (50) collecte une information d'état de la batterie.

4. Équipement de surf selon la revendication 1, dans lequel le module de propulsion (40) comprend un moteur électrique et une hélice et le moteur électrique entraîne l'hélice pour la mettre en rotation, et le contrôleur de vitesse (70) est électriquement couplé au moteur électrique.

5. Équipement de surf selon la revendication 1, dans lequel le module de batterie (30) comprend un panneau de protection de batterie électriquement couplé à la batterie et à l'émetteur de signal (50), respectivement.

6. Équipement de surf selon la revendication 1, dans lequel le module de batterie (30) comprend en outre une fiche électrique et le module de propulsion (40) comprend en outre une prise électrique (84), la fiche électrique étant branchée dans la prise électrique (84) via le trou traversant (23).

7. Équipement de surf selon la revendication 1, dans lequel la planche de surf (20) est dotée d'une chambre de batterie (21) et d'une chambre de puissance (22), la chambre de batterie (21) et la chambre de puissance (22) étant en communication avec le trou traversant (23) et situées sur deux surfaces opposées de la planche de surf (20), et le module de batterie (30) est disposé dans la chambre de batterie (21) et le module de propulsion (40) est disposé dans la chambre de puissance (22).

8. Équipement de surf selon la revendication 7, dans lequel la chambre de batterie (21) et la chambre de puissance (22) sont empilées dans une direction d'épaisseur de la planche de surf (20).

9. Équipement de surf selon la revendication 7, dans lequel le module de batterie (30) et le module de propulsion (40) sont connectés de manière détachable à la planche de surf (20).
